# EUROPEAN PATENT SPECIFICATION

(11) **EP 4 368 002 B1**
(45) Date of publication and mention of the grant of the patent: **08.07.2026**
(21) Application number: 22885406.3
(22) Date of filing: 01.09.2022
(51) Int. Cl.: A01D 34/00, A01D 34/69, H02P 5/52, H02P 21/18

(54) **SELF-PROPELLED WORKING MACHINE WITH DYNAMIC MOTOR CONTROL SUBORDINATION**
SELBSTFAHRENDE ARBEITSMASCHINE MIT DYNAMISCHER UNTERORDNUNG DER MOTORSTEUERUNG
MACHINE DE TRAVAIL AUTOMOTRICE AVEC SUBORDINATION DYNAMIQUE DE LA COMMANDE MOTEUR

(30) Priority: 29.10.2021 CN 202111269449
(43) Date of publication of application: 15.05.2024
(73) Proprietor: Nanjing Chervon Industry Co., Ltd., Nanjing, Jiangsu 211106 (CN)
(72) Inventor: REN, Yufei, Nanjing, Jiangsu 211106 (CN)
(74) Representative: Sun, Yiming
(86) International application number: PCT/CN2022/116466
(87) International publication number: WO 2023/071515

(56) References cited:
- EP-A2- 1 014 553
- EP-B1- 2 905 891
- WO-A1-2021/004484
- CN-A- 110 460 266
- CN-A- 111 756 280
- CN-A- 112 583 321
- CN-U- 211 580 675
- US-A1- 2010 125 384

## Description

### TECHNICAL FIELD

The present disclosure relates to garden tools, for example, a self-propelled working machine.

### BACKGROUND

The mower is the main development direction of a garden product. To better control the traveling wheels on the left and right sides of the mower to travel, each running wheel usually corresponds to one drive motor. Under the control of two drive motors, the traveling wheels can be better controlled to follow a preset path, for example, travel in a straight line or turn. However, when the two drive motors control the mower to travel, due to problems with the control chip clock frequency and the software control accuracy, there are often gaps between the speeds of the two drive motors and respective set values. Therefore, the mower travels along a line that is not straight or along a non-standard arc, causing the driving path of the vehicle to deviate from the preset path.

EP2905891B1 discloses a power apparatus including a first motor, a second motor connected with the first motor in parallel, a driver configured to supply driving currents to the first and second motors, a current detector configured to detect the driving current of the first motor and the driving current of the second motor, a speed calculator configured to calculate a rotating speed of the first motor and a rotating speed of the second motor, and a controller configured to control the driver based on the rotating speed of the first motor, wherein the controller controls the driver so that the rotating speed of the first motor and the rotating speed of the second motor are the same as each other, when the rotating speed of the first motor and the rotating speed of the second motor are different from each other.

US2010125384A1 discloses electronic control systems and methods for controlling electric auxiliary motors for performing work, such as electric deck motors for mower blades. The apparatus is shown in use with a vehicle that includes a mowing deck. Features of the control systems allow for safe and efficient use of the vehicle.

EP1014553A2 discloses a synchronization control device and a synchronization control method in which it includes controllers Am and Asl of a master section and a slave section for accurately synchronizing rotational frequency and rotation phases of driving electric motors Mm and Msl. The controller Asl includes rotational frequency detectors Ssl, Fsl, a master phase counter Cml, and a slave phase counter Csl, and detects at all times both of a rotational frequency and a rotation phase of the electric motors Mm of the master based upon an output of the rotary encoder Pm, and further detects at all times both of a rotational frequency and a rotation phase of the electric motor Msl of the slave. A phase deviation calculator Hsl is provided to calculate synchronization phase deviation at all times, and when a switch RYsl is actuated, it corrects an output of the rotational frequency detection means Ssl based upon the phase deviation and matches origins of the electric motors of the master section and the slave section to shift the operation to synchronization control.

### SUMMARY

The present disclosure is set out in the appended set of claims.

### BRIEF DESCRIPTION OF DRAWINGS

FIG. 1 is a structural view of a mower according to an example of the present disclosure;
FIG. 2 is a control logic diagram of a drive traveling motor in the related art;
FIG. 3 is a logic control diagram of a drive traveling motor according to an example of the present disclosure;
FIG. 4 is a logic control diagram of a drive traveling motor according to another example of the present disclosure; and
FIG. 5 is a flowchart of a control method for a drive traveling motor according to an example of the present disclosure. The embodiment shown in FIG. 5 is not encompassed by the wording of the claims but is considered as useful for understanding the invention.

### DETAILED DESCRIPTION

The present disclosure is described below in detail in conjunction with drawings and examples. It is to be understood that the examples described herein are intended to illustrate and not to limit the present disclosure. Additionally, it is to be noted that to facilitate description, only part, not all, of structures related to the present disclosure are illustrated in the drawings.

In the present invention, a self-propelled working machine may be any type of garden tool, for example, a mower, a snow thrower, a trolley, or another tool or device or may be any other tool or device in which at least two drive motors separately drive traveling wheels. The mower may include a push mower, a rear-traveling mower, a smart mower, or the like.

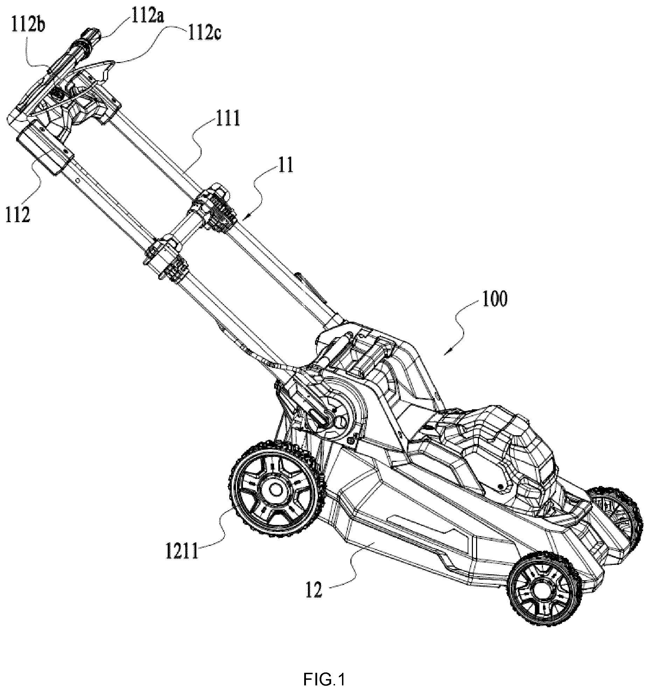

In this example, the mower is used as an example. Referring to FIG. 1, a mower 100 mainly includes a handle device 11, a connecting rod 111, an operating member 112, an operating switch 112a, a body 12, and a traveling assembly 121. The handle device 11 includes the connecting rod 111 and the operating member 112 that can be held. The operating member 112 includes a grip for a user to hold and the operating switch 112a, the connecting rod 111 is a hollow long rod structure, and the connecting rod 111 connects the operating member 112 to the body 12. The traveling assembly 121 is mounted onto the body 12 and is rotatable around a rotating shaft so that the entire mower 100 is movable on the ground. It is to be understood that the traveling assembly 121 is traveling wheels of the mower 100. The traveling assembly 121 includes a first traveling assembly 1211 and a second traveling assembly 1212. The first traveling assembly 1211 is located on a side of the mower 100, and the second traveling assembly 1212 is located on the other side of the mower 100. The traveling assembly 121 in this example may include the traveling wheels.

In accordance with the invention, the first traveling assembly 1211 is driven by a first drive motor 1221, and the second traveling assembly 1212 is driven by a second drive motor 1222. That is to say, the traveling wheels on two sides of the mower 100 are separately driven by two different drive motors. The body 12 of the mower 100 is further provided with a control panel (not shown), and a control circuit 123 on the control panel can control the operation of the first drive motor 1221 or the second drive motor 1222. For example, each drive motor may correspond to one control circuit, and one control circuit controls the operation of one drive motor.

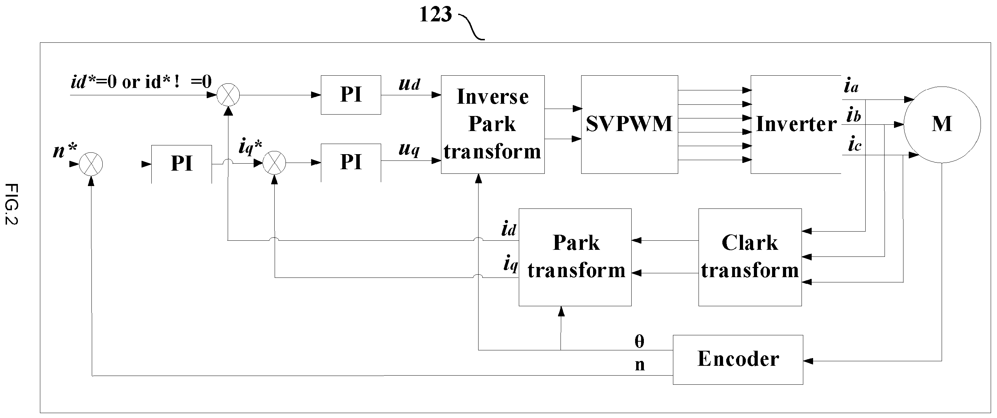

In this example, the control circuit 123 is a magnetic field-oriented control (FOC) circuit. As shown in FIG. 2, the commonly used FOC circuit 123 is a double closed-loop control system and has a speed regulation system with an inner current loop and an outer rotational speed loop. The inner current loop is nested in the outer rotational speed loop, a rotational speed regulator outputs a given current, and the inner current loop actually controls the torque of an electric motor. For example, the stator current of the motor is decomposed into excitation component current *i_{d}** and torque component current *i_{q}*.* Under normal circumstances, the excitation current given value *i_{d}** is set to 0, the expected rotational speed of the motor is configured to be a given value *n** of the rotational speed loop, and an output value of a proportional-integral-differential (PID) regulator into which the given value of the rotational speed loop is inputted is used as the given value *i_{q}** of a current loop torque component. The outputs of *i_{d}** and *i_{q}** through the PID regulator are *u_{d}* and *u_{q}.* After *u_{d}* and *u_{q}* go through inverse Park transform and space vector pulse-width modulation (SVPWM), a pulse-width modulation (PWM) wave is outputted to a drive terminal of an inverter, and the output of the inverter is three-phase currents *iₐ, i_{b},* and *i_{c}* controlled by the electric motor. In this manner, the speed-current loop control of the drive motor is achieved so that the speed of the motor can be stably controlled.

It is to be understood that for the working machine with traveling assemblies on two sides, the traveling assembly on each side is driven and controlled by a respective motor to travel; when the working machine needs to travel in a straight line, the motors on two sides should rotate by the same number of rotations; however, if only the double closed-loop control system of the PI regulator is relied on, due to the existence of steady-state errors, the actual rotational speeds of the motors on two sides may fluctuate within an error range, and the final traveling trajectory may not be a straight line. During mass production, since the differential speed relationship between the motors on the two sides is not clear, steering deviations in different directions occur under straight-line instructions.

In an example of the present invention, the FOC circuit 123 uses two different control manners to separately control the drive motors corresponding to the traveling wheels on two sides. In accordance with the invention, the control circuit 123 separately detects the rotational state parameters of two drive motors, and by comparing the rotational state parameters of the two motors, the drive motors on two sides are divided into a master motor and a slave motor. The FOC is performed on the master motor and the slave motor in different manners. The so-called comparison of the rotational state parameters of the two motors may be the comparison of the magnitudes of the rotational state parameters of the two motors, the ratio or difference of the rotational state parameters of the two motors, or the like. The control circuit 123 controls the operation of the main drive motor in a first control manner and controls the operation of the slave drive motor in a second control manner. The specific method for distinguishing between the master drive motor and the slave drive motor is described in the subsequent examples. In this example, the rotational state parameter of the motor may be any one or more of the number of rotations of the motor, the rotational speed of the motor, the rotor position of the motor, the direction of the turning radius of the mower, or the traveling state of the mower. The traveling state and the direction of the turning radius of the mower may both represent the bend direction of the arc in which the mower travels under a current instruction, that is, the steering of the mower. The number of rotations of the motor may be the total number of rotations of the motor in a certain traveling state. For example, the number of rotations of the motor may be an integer number of rotations or a non-integer number of rotations.

In an example, the first control manner is an FOC manner with a first control loop and a second control loop, and the second control manner is an FOC manner with the first control loop, the second control loop, and a third control loop. It is to be noted that an output parameter of the drive motor in the first control manner may be used as a set input parameter of the third control loop of the drive motor in the second control manner, a feedback parameter or an actual parameter of the third control loop is an output parameter of the drive motor in the second control manner, and an output parameter of the third control loop is an input parameter of the second control loop of the drive motor in the second control manner. That is to say, in the two control manners of the two drive motors, the output parameter of one motor is used as a preset output parameter of the other motor. In this manner, according to the operation state of one motor, the operation state of the other motor is adjusted such that the two motors have the same motion state.

In an example, in the first control manner, the first control loop is the current loop, and the second control loop is the speed loop. The first control manner is the rotational speed-current loop control under traditional FOC shown in FIG. 2. In the second control manner, the first control loop is the current loop, the second control loop is the rotational speed loop, and the third control loop is a number-of-rotations loop. The so-called number-of-rotations loop may also be referred to as a position loop and is an adjustment in which the output parameter obtained after PID adjustment of the actual number of rotations and the set number of rotations of the motor is used as the set input parameter of the rotational speed loop.

In an example, the control circuit 123 may include a first control unit and a second control unit. The first control unit corresponds to the first drive motor 1221, the second control unit corresponds to the second drive motor 1222, and a communication unit (not shown) is disposed between the two control units. Therefore, the two control units may exchange data after detecting the rotational state parameters of the drive motors so that the two control units can distinguish between the master motor and the slave motor among the two drive motors according to the detected parameters. In an example, an encoder may be used to detect the rotor position of the motor and the actual number of rotations of the motor in real time during the rotation of the motor, or the rotor position or the number of rotations of the motor may be acquired through position estimation without an encoder. The encoder may be a photoelectric encoder. In the example of the present invention, the method for acquiring the number of rotations or the rotor position of the motor is not limited.

**In** an example, when the motor rotates for one electrical cycle, an electrical angle ranges from 0° to 360°. By detecting the difference between the electrical angle at the current moment and the electrical angle at the previous moment, whether the motor has gone through an electrical cycle is determined. Since the motor has two manners: forward rotation and reverse rotation, the electrical angle changes in two manners: from 0° to 360° or from 360° to 0°. Therefore, when the angle difference is determined, the absolute value of the angle difference needs to be used as the determination condition. When the absolute value of the difference is greater than a certain fixed value, it is considered that the electrical angle of the motor has rotated by one turn, thereby determining that the motor rotates by 1/P turns, where P denotes the number of pole pairs of the motor. In an example, to improve the accuracy of calculating the number of rotations of the motor, the sampling frequency of the electrical angle is configured to be greater than the rotational frequency of the electrical angle. For example, to improve the accuracy of comparing the number of rotations, the accuracy of comparing the number of rotations of the motor may be increased to 0.5 turns, 0.1 turns, or the like.

In accordance with the invention, the control circuit 123 distinguishes between the master motor and the slave motor according to the rotational state parameters of the drive motors. The rotational state parameter may include the rotational speed, the number of rotations, the rotor position, the steering state, or the like. That is to say, the control circuit 123 may determine the master motor and the slave motor according to traveling instruction information before the mower travels, that is, before the motor rotates. For example, when the traveling instruction is to turn left, the right motor is determined as the master motor; when the traveling instruction is to turn right, the left motor is determined as the master motor; and when the traveling instruction is to travel straight, any motor is selected as the master motor. When the mower travels, the control circuit 123 may determine the master motor and the slave motor according to the number of rotations or the rotational speed of the motor in an instruction state. For example, the drive motor with a greater number of rotations or a greater rotational speed may be used as the master motor, and the other drive motor may be used as the slave motor. For example, after the motor rotates, the master-slave relationship between the two motors may be determined according to the absolute values of the given speed amplitudes of the motors, with the one with a greater rotational speed being the master motor and the other being the slave motor. The main reason why the motor with a greater rotational speed is used as the master motor is described below. The ratio of the distances by which the two motors travel within the same period is equal to the ratio of the numbers of rotations of the motors. It is assumed that the ratio of the distances or the numbers of rotations of the two motors is: fast motor/slow motor = N (N > 1). If the slow motor is used as the master

motor and the fast motor is used as the slave motor, when the slow motor has an error in counting the number of rotations, the reference number of rotations of the fast motor causes the multiplication of the error of the slow motor by **N,** and the error is amplified, which is not conducive to control. On the contrary, if the fast motor is used as the master motor, the reference number of rotations of the slow motor causes the division of the error caused by the number of rotations of the fast motor by **N,** and the error is reduced, which is conducive to control. Of course, when the two drive motors have the same rotational speed or the same number of rotations, any one of the two motors may be used as the master motor, and the other motor is used as the slave motor.

In an example, the control circuit 123 may detect the traveling state of the mower and determine the master motor and the slave motor according to the traveling state. For example, when the mower travels in a straight line, the control circuit 123 may use any drive motor as the master motor and use the other motor as the slave motor; when the mower has a traveling radius to the left, the control circuit 123 uses the right drive motor as the master motor; on the contrary, when the mower has a traveling radius to the right, the control circuit 123 uses the left drive motor as the master motor. The mower has a traveling radius to the left, which may be understood as follows: the mower turns to the left, the left traveling wheel is the inner turning wheel, the right traveling wheel is the outer turning wheel, and the control circuit 123 may use the drive motor controlling the inner turning wheel to travel as the slave drive motor and use the drive motor controlling the outer turning wheel to travel as the maser drive motor.

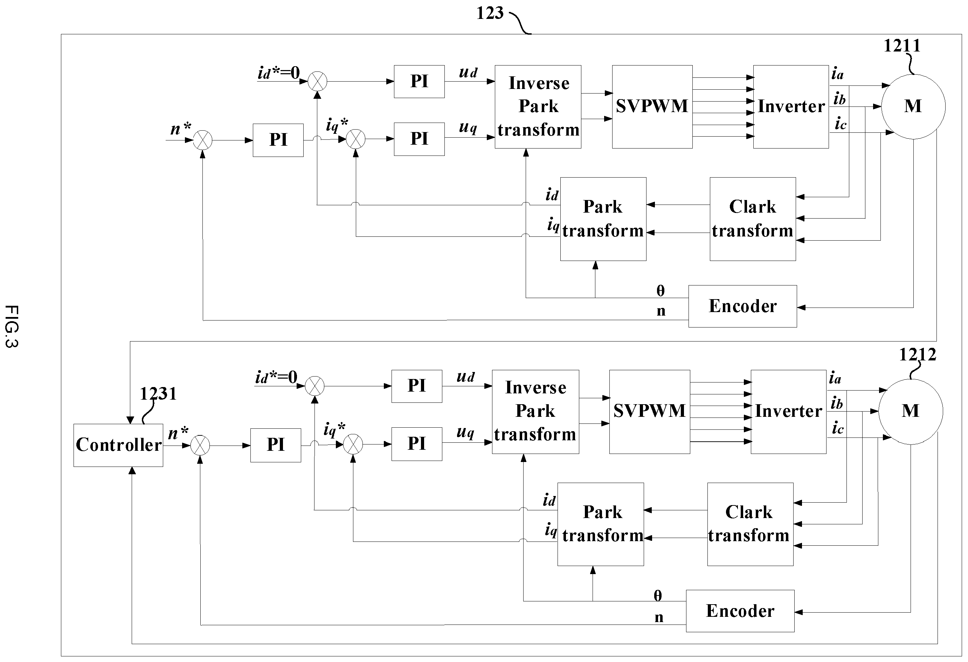

In this example, after the master motor and the slave motor are determined, the operation of the master motor is controlled in the first control manner, and the operation of the slave motor is controlled in the second control manner. For example, as shown in FIG. 3, it is assumed that the first drive motor 1221 is the master motor and the second drive motor 1222 is the slave motor. It can be seen from FIG. 3 that the FOC of the first drive motor 1221 is consistent with the traditional FOC speed-current loop control, and the details are not repeated here. The difference is that the output parameter of the first drive motor 1221, that is, the number of rotations of the motor, is outputted to the third control loop of the second drive motor 1222 and used as the set input parameter of the third control loop, that is, the number-of-rotations loop. In an example, a controller 1231 is provided in the third control loop. The controller 1231 can acquire the number of rotations of the first drive motor 1221 and the number of rotations of the second drive motor 1222, use the number of rotations of the first drive motor 1221 as the set input parameter, use the number of rotations of the second drive motor 1222 as the feedback parameter, and after modulation, generate the set input parameter of the second control loop, that is, the rotational speed loop, which is the set rotational speed. It is to be noted that for the control process of the current loop and the rotational speed loop in the second drive motor 1222, reference may be made to the control process of the rotational speed-current loop of the traditional FOC, so as to achieve the rotation control of the second drive motor 1222, and the details are not repeated here. The number of rotations of the master motor is used as the input parameter for the rotation adjustment of the slave motor so that the adjustment of the synchronous rotation of the two motors is achieved, and the traveling route control of the mower is more accurate during the traveling control process of the two motors, thereby achieving a better traveling effect.

Based on the preceding examples, the mower 100 can travel according to the preset trajectory. However, when there is interference from an external force, the traveling direction of the drive motor changes, that is, the mower 100 travels in the direction of the external force. For example, in the traveling process of the mower, if the mower encounters a sudden intrusion of a person or object, cannot avoid the obstacle, and collides with the obstacle, the traveling direction of the mower deviates from the original path.

The present invention provides the examples described below.

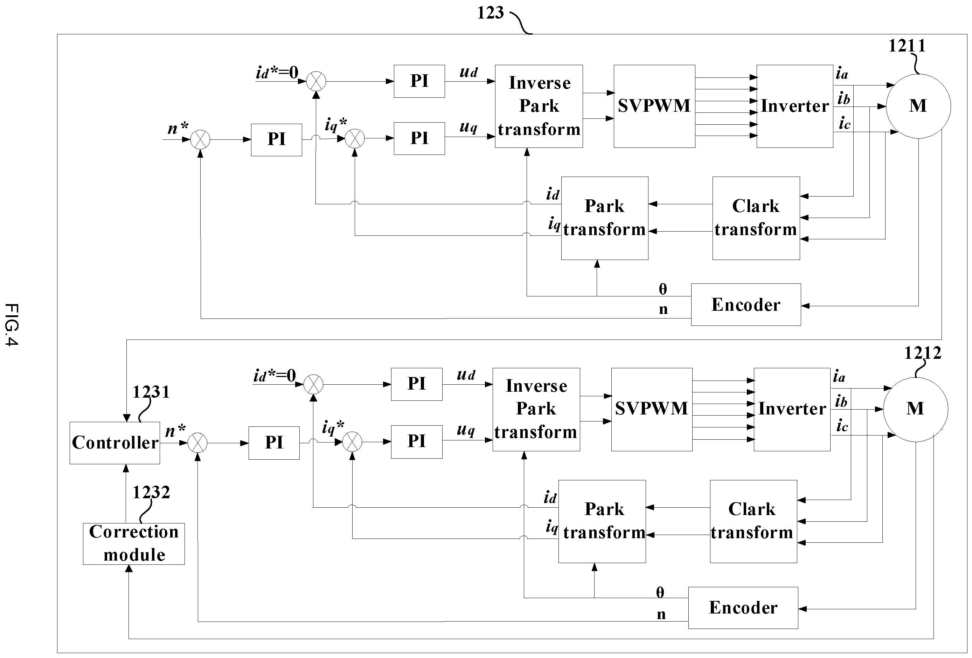

In an example, as shown in FIG. 4, a correction module 1232 is provided in the mower 100 and can correct the parameter in the third control loop in the second control manner. For example, the correction module 124 may be connected between the controller 1231 and the second drive motor 1222 to correct a rotational parameter of the motor generated due to the influence of an external force.

In an example, the correction module 124 includes an inertial measurement unit (IMU). The IMU unit can read the actual angle value at which the mower deviates and according to the difference between the actual angle value and the set angle value, adjust the number of rotations outputted by the second drive motor 1212, thereby correcting the difference between the number of rotations of the first drive motor 1221 and the number of rotations of the second drive motor 1222 and changing the set input parameter of the rotational speed loop. In this manner, the following case is avoided: the rotational parameter of the second drive motor 1222 is inaccurate due to the influence of an external force, causing the set parameter outputted by the third control loop to the second control loop to be inaccurate. Therefore, the mower can still travel along the original route.

In an example, the control circuit 23 may be a brushless direct current electric motor (BLDC) control circuit, a combination of any two control circuits, or another control circuit.

In this example, except for the addition of the correction module 124, other control processes are consistent with those in the example shown in FIG. 3, and the details are not repeated here.

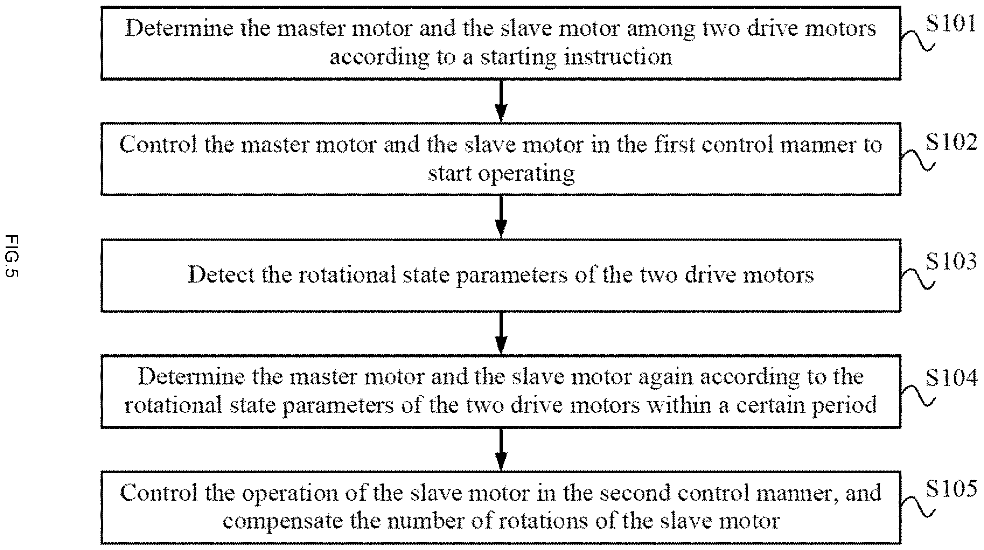

As shown in FIG. 5, the present disclosure further provides a method for a rear-traveling propelled working machine. The method includes the steps described below.

In S101, the master motor and the slave motor are determined among two drive motors according to a starting instruction.

When the machine is controlled to start traveling, the starting instruction may be a straight-forward instruction, a left-turn instruction, a right-turn instruction, or the like. When the instruction for starting traveling is the straight-forward instruction, any drive motor may be determined as the master motor and the other is determined as the slave motor; when the instruction for starting traveling is the left-turn instruction, the right motor is determined as the master motor and the left motor is determined as the slave motor; and when the instruction for starting traveling is the right-turn instruction, the left motor is determined as the master motor and the right motor is determined as the slave motor. It is to be understood that the left-turn instruction or the right-turn instruction means that the machine turns left or right in the forward direction, and the left and right turns of the machine in the backward direction have the same principles as the left and right turns of the machine in the forward direction. The details are not repeated here.

In S102, the two drive motors are controlled in the first control manner to start operating.

It is to be noted that when the mower starts, no matter what the instruction for starting traveling is, the control circuit controls the operation of the two drive motors in the first control manner. For example, the FOC control of the current-rotational speed loop is used for starting.

In S103, the rotational state parameters of the two drive motors are detected.

For example, the rotational state parameter may include any one or more of the number of rotations, the rotational speed, the rotor position, the direction of the turning radius, or the operation state.

In S104, the master motor and the slave motor are determined again according to the rotational state parameters of the two drive motors within a certain period.

It is to be understood that in the traveling process of the machine, the traveling instruction changes, and thus the master motor and the slave motor change accordingly. Therefore, in the traveling process of the machine, the main motor and the slave motor may be determined again according to the changed traveling instruction.

Under the same control instruction, the mower is in a traveling state. In the traveling state, the rotational state parameters of the two drive motors within a certain period are countable. For example, under the left-turn instruction, the turning radius is toward the left, and the rotational speed or the number of rotations of the left drive motor is less than the rotational speed or the number of rotations of the right drive motor so that the drive motor with a smaller number of rotations or a smaller rotational speed or the drive motor toward which the turning radius is may be determined as the slave motor, and the other is determined as the master motor. Under the straight-forward instruction, the two drive motors have the same rotational speed or the same number of rotations, or when the mower travels in a straight line, any drive motor may be determined as the master motor and the other is determined as the slave motor.

In S105, the operation of the slave motor is controlled in the second control manner, and the number of rotations of the slave motor is compensated.

While the operation of the slave motor is controlled in the second control manner, the master motor is still controlled in the first control manner. It is to be understood that the slave motor at this time may still be the initially determined slave motor or may change.

The present disclosure provides a method for controlling a working machine in which two electric motors are accurately controlled for driving and traveling to travel according to the preset route, and the control process has relatively high robustness.

## Claims

1. A self-propelled working machine (100), comprising:
a first traveling assembly (1211) and a first drive motor (1221) that drives the first traveling assembly (1211);
a second traveling assembly (1212) and a second drive motor (1222) that drives the second traveling assembly (1212); and
a control circuit (123) capable of controlling operation of the first drive motor (1221) or the second drive motor (1222);
wherein the control circuit (123) is configured to control operation of the first drive motor (1221) in a first control manner and control operation of the second drive motor (1222) in a second control manner; or control the operation of the second drive motor (1222) in the first control manner and control the operation of the first drive motor (1221) in the second control manner;
wherein an output parameter of the first control manner is used as an input parameter of the second control manner;
wherein the control circuit (123) is configured to detect rotational state parameters of the first drive motor (1221) and the second drive motor (1222); **characterized in that**
the control circuit (123) is configured to determine one of the first drive motor (1221) and the second drive motor (1222) as a master drive motor and another of the first drive motor (1221) and the second drive motor (1222) as a slave drive motor according to the rotational state parameters; and
control operation of the master drive motor in the first control manner and control operation of the slave drive motor in the second control manner.

2. The self-propelled working machine (100) of claim 1, wherein the control circuit (123) is a magnetic field-oriented control (FOC) circuit.

3. The self-propelled working machine (100) of claim 2, wherein the first control manner is FOC with a first control loop and a second control loop, and the second control manner is FOC with the first control loop, the second control loop, and a third control loop.

4. The self-propelled working machine (100) of claim 3, wherein a set input parameter of the third control loop is an output parameter of a drive motor in the first control manner, a feedback parameter of the third control loop is an output parameter of the drive motor in the second control manner, and an output parameter of the third control loop is a set input parameter of the second control loop of the drive motor in the second control manner.

5. The self-propelled working machine (100) of claim 3, further comprising:
a correction module (1232) configured to correct a parameter in the third control loop in the second control manner.

6. The self-propelled working machine (100) of claim 5, wherein the correction module (1232) comprises an inertial measurement unit (IMU), and the correction module (1232) is capable of correcting a feedback parameter fed back to a third control loop according to a parameter detected by the IMU and a preset expected parameter.

7. The self-propelled working machine (100) of claim 3, wherein the first control loop is a current loop, the second control loop is a speed loop, and the third control loop is a number-of-rotations loop.

8. The self-propelled working machine (100) of claim 1, wherein a rotational state parameter of the rotational state parameters comprises at least one of the following: a number of rotations of a drive motor, a rotational speed of the drive motor, a rotor position of the drive motor, a direction of a turning radius of a mower, or a traveling state of the mower.

9. The self-propelled working machine (100) of claim 8, wherein the control circuit (123) is configured to determine the drive motor with a large rotational speed as the master drive motor and determine the drive motor with a small rotational speed as the slave drive motor.

## Patentansprüche

1. Eine selbstfahrende Arbeitsmaschine (100), umfassend:
eine erste Fahranordnung (1211) und einen ersten Antriebsmotor (1221), der die erste Fahranordnung (1211) antreibt;
eine zweite Fahranordnung (1212) und einen zweiten Antriebsmotor (1222), der die zweite Fahranordnung (1212) antreibt; und
eine Steuerschaltung (123), die in der Lage ist, den Betrieb des ersten Antriebsmotors (1221) oder des zweiten Antriebsmotors (1222) zu steuern;
wobei die Steuerschaltung (123) dazu ausgebildet ist, den Betrieb des ersten Antriebsmotors (1221) in einer ersten Steuerungsweise zu steuern und den Betrieb des zweiten Antriebsmotors (1222) in einer zweiten Steuerungsweise zu steuern; oder den Betrieb des zweiten Antriebsmotors (1222) in der ersten Steuerungsweise zu steuern und den Betrieb des ersten Antriebsmotors (1221) in der zweiten Steuerungsweise zu steuern;
wobei ein Ausgangsparameter der ersten Steuerungsweise als ein Eingangsparameter der zweiten Steuerungsweise verwendet wird;
wobei die Steuerschaltung (123) dazu ausgebildet ist, Rotationszustandsparameter des ersten Antriebsmotors (1221) und des zweiten Antriebsmotors (1222) zu detektieren; **dadurch gekennzeichnet, dass**
die Steuerschaltung (123) dazu ausgebildet ist, einen von dem ersten Antriebsmotor (1221) und dem zweiten Antriebsmotor (1222) gemäß den Rotationszustandsparametern als einen Master-Antriebsmotor und einen anderen von dem ersten Antriebsmotor (1221) und dem zweiten Antriebsmotor (1222) als einen Slave-Antriebsmotor zu bestimmen; und
den Betrieb des Master-Antriebsmotors in der ersten Steuerungsweise zu steuern und den Betrieb des Slave-Antriebsmotors in der zweiten Steuerungsweise zu steuern.

2. Die selbstfahrende Arbeitsmaschine (100) nach Anspruch 1, wobei die Steuerschaltung (123) eine magnetfeldorientierte Steuerschaltung (FOC) ist.

3. Die selbstfahrende Arbeitsmaschine (100) nach Anspruch 2, wobei die erste Steuerungsweise eine FOC mit einer ersten Regelschleife und einer zweiten Regelschleife ist, und die zweite Steuerungsweise eine FOC mit der ersten Regelschleife, der zweiten Regelschleife und einer dritten Regelschleife ist.

4. Die selbstfahrende Arbeitsmaschine (100) nach Anspruch 3, wobei ein vorgegebener Eingangsparameter der dritten Regelschleife ein Ausgangsparameter eines Antriebsmotors in der ersten Steuerungsweise ist, ein Rückkopplungsparameter der dritten Regelschleife ein Ausgangsparameter des Antriebsmotors in der zweiten Steuerungsweise ist, und ein Ausgangsparameter der dritten Regelschleife ein vorgegebener Eingangsparameter der zweiten Regelschleife des Antriebsmotors in der zweiten Steuerungsweise ist.

5. Die selbstfahrende Arbeitsmaschine (100) nach Anspruch 3, ferner umfassend:
ein Korrekturmodul (1232), das dazu ausgebildet ist, einen Parameter in der dritten Regelschleife in der zweiten Steuerungsweise zu korrigieren.

6. Die selbstfahrende Arbeitsmaschine (100) nach Anspruch 5, wobei das Korrekturmodul (1232) eine Trägheitsmesseinheit (IMU) umfasst, und das Korrekturmodul (1232) in der Lage ist, einen an eine dritte Regelschleife zurückgekoppelten Rückkopplungsparameter gemäß einem von der IMU detektierten Parameter und einem voreingestellten Sollparameter zu korrigieren.

7. Die selbstfahrende Arbeitsmaschine (100) nach Anspruch 3, wobei die erste Regelschleife eine Stromschleife, die zweite Regelschleife eine Drehzahlschleife und die dritte Regelschleife eine Umdrehungsanzahlschleife ist.

8. Die selbstfahrende Arbeitsmaschine (100) nach Anspruch 1, wobei ein Rotationszustandsparameter der Rotationszustandsparameter mindestens eines der Folgenden umfasst: eine Anzahl von Umdrehungen eines Antriebsmotors, eine Rotationsgeschwindigkeit des Antriebsmotors, eine Rotorposition des Antriebsmotors, eine Richtung eines Wenderadius eines Mähers oder einen Fahrzustand des Mähers.

9. Die selbstfahrende Arbeitsmaschine (100) nach Anspruch 8, wobei die Steuerschaltung (123) dazu ausgebildet ist, den Antriebsmotor mit einer großen Rotationsgeschwindigkeit als den Master-Antriebsmotor zu bestimmen und den Antriebsmotor mit einer kleinen Rotationsgeschwindigkeit als den Slave-Antriebsmotor zu bestimmen.

## Revendications

1. Une machine de travail automotrice (100), comprenant :
un premier ensemble de déplacement (1211) et un premier moteur d'entraînement (1221) qui entraîne le premier ensemble de déplacement (1211) ;
un deuxième ensemble de déplacement (1212) et un deuxième moteur d'entraînement (1222) qui entraîne le deuxième ensemble de déplacement (1212) ; et un circuit de commande (123) capable de commander le fonctionnement du premier moteur d'entraînement (1221) ou du deuxième moteur d'entraînement (1222) ;
dans lequel le circuit de commande (123) est configuré pour commander le fonctionnement du premier moteur d'entraînement (1221) selon un premier mode de commande et commander le fonctionnement du deuxième moteur d'entraînement (1222) selon un deuxième mode de commande ; ou commander le fonctionnement du deuxième moteur d'entraînement (1222) selon le premier mode de commande et commander le fonctionnement du premier moteur d'entraînement (1221) selon le deuxième mode de commande ;
dans lequel un paramètre de sortie du premier mode de commande est utilisé comme paramètre d'entrée du deuxième mode de commande ;
dans lequel le circuit de commande (123) est configuré pour détecter des paramètres d'état de rotation du premier moteur d'entraînement (1221) et du deuxième moteur d'entraînement (1222) ; **caractérisé en ce que**
le circuit de commande (123) est configuré pour déterminer l'un du premier moteur d'entraînement (1221) et du deuxième moteur d'entraînement (1222) comme moteur d'entraînement maître et l'autre du premier moteur d'entraînement (1221) et du deuxième moteur d'entraînement (1222) comme moteur d'entraînement esclave selon les paramètres d'état de rotation ; et
commander le fonctionnement du moteur d'entraînement maître selon le premier mode de commande et commander le fonctionnement du moteur d'entraînement esclave selon le deuxième mode de commande.

2. La machine de travail automotrice (100) selon la revendication 1, dans lequel le circuit de commande (123) est un circuit de commande orientée champ magnétique (FOC).

3. La machine de travail automotrice (100) selon la revendication 2, dans lequel le premier mode de commande est une FOC avec une première boucle de commande et une deuxième boucle de commande, et le deuxième mode de commande est une FOC avec la première boucle de commande, la deuxième boucle de commande et une troisième boucle de commande.

4. La machine de travail automotrice (100) selon la revendication 3, dans lequel un paramètre d'entrée de consigne de la troisième boucle de commande est un paramètre de sortie d'un moteur d'entraînement dans le premier mode de commande, un paramètre de retour de la troisième boucle de commande est un paramètre de sortie du moteur d'entraînement dans le deuxième mode de commande, et un paramètre de sortie de la troisième boucle de commande est un paramètre d'entrée de consigne de la deuxième boucle de commande du moteur d'entraînement dans le deuxième mode de commande.

5. La machine de travail automotrice (100) selon la revendication 3, comprenant en outre :
un module de correction (1232) configuré pour corriger un paramètre dans la troisième boucle de commande dans le deuxième mode de commande.

6. La machine de travail automotrice (100) selon la revendication 5, dans lequel le module de correction (1232) comprend une unité de mesure inertielle (IMU), et le module de correction (1232) est apte à corriger un paramètre de retour renvoyé à une troisième boucle de commande selon un paramètre détecté par l'IMU et un paramètre attendu prédéfini.

7. La machine de travail automotrice (100) selon la revendication 3, dans lequel la première boucle de commande est une boucle de courant, la deuxième boucle de commande est une boucle de vitesse de rotation, et la troisième boucle de commande est une boucle de nombre de rotations.

8. La machine de travail automotrice (100) selon la revendication 1, dans lequel un paramètre d'état de rotation des paramètres d'état de rotation comprend au moins l'un des éléments suivants : un nombre de rotations d'un moteur d'entraînement, une vitesse de rotation du moteur d'entraînement, une position de rotor du moteur d'entraînement, une direction d'un rayon de braquage d'une tondeuse, ou un état de déplacement de la tondeuse.

9. La machine de travail automotrice (100) selon la revendication 8, dans lequel le circuit de commande (123) est configuré pour déterminer le moteur d'entraînement ayant une grande vitesse de rotation comme moteur d'entraînement maître et déterminer le moteur d'entraînement ayant une petite vitesse de rotation comme moteur d'entraînement esclave.
